# EUROPEAN PATENT SPECIFICATION

(11) **EP 4 304 226 B1**
(45) Date of publication and mention of the grant of the patent: **19.06.2024**
(21) Application number: 22305994.0
(22) Date of filing: 04.07.2022
(51) Int. Cl.: H04W 12/30, H04W 12/106, H04W 12/72, H04W 12/08

(54) **PROVISIONING OF SECURITY MODULES**
BEREITSTELLUNG VON SICHERHEITSMODULEN
FOURNITURE DE MODULES DE SÉCURITÉ

(43) Date of publication of application: 10.01.2024
(73) Proprietor: Kigen (UK) Limited, Cambridge Cambridgeshire CB1 2GE (GB)
(72) Inventor: BIGET, Patrick Marcel Roland, BELFAST, BT1 3BG (GB); ALLARD, Jérôme, Frédérick, BELFAST, BT1 3BG (GB); TEBBUTT, Colin, Dean, BELFAST, BT1 3BG (GB); LÜDERS-JENSEN, Kim, BELFAST, BT1 3BG (GB)
(74) Representative: D Young & Co LLP

(56) References cited:
- WO-A1-2021/127577
- WO-A1-2022/083946

## Description

The present technique relates to provisioning of security modules.

Security modules may be associated with devices in order to control access by those devices to a service, such as access to network infrastructure provided by a network operator. Security modules may need to be provisioned with a subscription profile (which may be considered sensitive data) in order to authenticate to and access remote services. As an example, a Subscriber Identity Module (SIM), which may also be referred to as a Universal Integrated Circuit Card (UICC), may be inserted, embedded or integrated within a device, and may be able to store more than one subscription profile, where each subscription profile is associated with a network operator and a set of credentials to control the access to the cellular network and other operator services. For example, the SIM may be a plastic card (a smart card), an embedded UICC (eUICC) where the UICC is provided as a chip mounted on the circuit board of a device, or an integrated UICC (iUICC) incorporated as one of the modules within a System-on-Chip (SoC).

The organisation and structure of such security modules may be defined by certain Telecommunications Standards, for example by ETSI, 3GPP and GSMA Standards.

One of the key security requirements in the generation of such security modules is the prevention of duplicate production (also called cloning prevention), i.e. the prevention of producing several security modules with the same identity or credentials. In the example of a SIM, this security requirement is regulated by the Security Accreditation Scheme (SAS) under the control of the GSMA. The FS.18 specifications (SAS Consolidated Security Guidelines) state that "Prevention of duplicate production is a fundamental principle of SAS".

WO 2022/083946 A1 describes a method of managing the provisioning of security modules, each security module being formed by a chip with at least one subscription profile installed thereon. The method comprises providing a plurality of chips, each chip having a unique chip identifier for that chip and having stored thereon a group key that is common to the plurality of chips, and generating a plurality of data files, each data file having a unique data file identifier for that data file and providing data for an associated subscription profile including an initial network authentication key for the associated subscription profile. Each of the data files is encrypted with the group key. For each data file in the plurality of data files the method further comprises: receiving the encrypted version of that data file and performing a load operation to load that data file onto a selected chip, during which the encrypted version of that data file is decrypted using the group key as stored on the selected chip; and performing a key transformation operation using security module operating software loaded onto the selected chip to calculate a transformed network authentication key from the initial network authentication key. On successful performance of the load operation and the key transformation operation, the security module operating software generates a proof of loading (PoL) file that is cryptographically signed using a signing key, the PoL file identifying the unique data file identifier for the loaded data file and the unique chip identifier of the chip onto which the loaded data file has been loaded.

In one example arrangement there is provided a method according to claim 1.

In another example arrangement there is provided a system configured to perform the method described above.

The present technique will be described further, by way of illustration only, with reference to examples thereof as illustrated in the accompanying drawings, in which:
Figure 1 is a block diagram of a system in accordance with one example implementation;
Figure 2 is a block diagram illustrating components provided within a security module in one example arrangement;
Figure 3 illustrates a smart card which is an example of a secure execution environment for executing token generation software;
Figures 4A to 4D provide a flow diagram identifying steps performed to manage the provisioning of security modules in accordance with one example implementation; and
Figure 5 schematically illustrates portions of a proof of loading mechanism, other than the token generation; and
Figure 6 illustrates the token generation portion of the proof of loading mechanism.

As mentioned earlier, one of the key security requirements in the generation of security modules is the prevention of duplicate production.

As an example in the context of network access, where the security module may be a SIM for access control to a cellular network, mobile network operators (MNOs) typically order security modules in batches, and issue an input file for each batch containing subscription profile identification information for the subscription profiles to be provided on those security modules. The subscription profile identification information may for example comprise IMSI (International Mobile Subscriber Identity) and/or ICCID (Integrated Circuit Card Identifier) information, and the MNO may specify a range of values for those items of identification information.

The MNO will typically require all of the different values of subscription profile identification information within the identified range (for example all the specified IMSI and ICCID values) to be used, but during the security module production process, a given percentage of the security modules may be defective (this percentage often being referred to as the "yield loss"). A defective security module generates a gap in the sequence of subscription profile identification information, for which a replacement security module needs to be produced using the particular subscription profile identification information that had been associated with the defective security module. Whilst this rework process is relatively straightforward to implement in a traditional SIM manufacturing facility, it causes significant issues when considering embedded or integrated security modules (such security modules also being referred to as eSIMs and iSIMs herein), where the production process is much more distributed.

A so-called "two-step personalisation process" has been defined to tackle the specific constraints of eSIMs and iSIMs. In particular, the personalisation is split into two steps, namely a first step where the hardware is personalised with security credentials (for example chip unique root of trust (RoT) keys), and a second step involving the personalisation of the eSIM or iSIM operating system (OS) credentials (for example network keys).

In order to meet the duplicate prevention requirement, the security credentials must be unique for the hardware, and the eSIM or iSIM OS credentials must be tied to the hardware security credentials. However, for the particular case of iSIM, these personalisation operations may be performed at different times, in different locations, and/or by different entities, and hence any rework process required to deal with the above-mentioned "holes" can generate very significant delays in the manufacturing chain.

Similar problems may arise in provisioning of security modules for access to a service other than network access. While many of the examples discussed below are, for ease of understanding, described in the context of provisioning an eSIM or iSIM with a subscription profile for network access, it will be appreciated that the techniques can also be used to provision security modules with subscription profiles for access to other kinds of services.

The techniques described herein aim to alleviate such issues.

In accordance with the techniques described herein, a method of managing the provisioning of security modules is provided, each security module being formed by a chip with at least one subscription profile installed thereon. The method comprises providing a plurality of chips, each chip having a unique chip identifier for that chip and having stored thereon a group key that is common to the plurality of chips. The method also includes receiving a plurality of data files, each data file being encrypted with the group key and having a unique data file identifier for that data file and providing data for an associated subscription profile including a service credential (e.g. an authentication key) for the associated subscription profile. For each data file in the plurality of data files, the method further comprises performing a load operation to load that data file onto a selected chip, during which the encrypted version of that data file is decrypted using the group key as stored on the selected chip. On successful performance of the load operation, the method comprises employing security module operating software loaded on the selected chip to generate a proof of loading (PoL) file identifying the unique data file identifier for the loaded data file and the unique chip identifier of the chip onto which the loaded data file has been loaded as well as authenticating said identifiers by means of signature, HMAC or similar cryptographic message authentication technique, based on a PoL signing key. The PoL file is processed using token generation software for generating a token for the selected chip, the token generation software being executed in a secure execution environment. The token generation software restricts generation of the token to ensure that, for a given data file, if two or more chips are successfully loaded with that given data file, the token is generated for only one of the two or more chips. In response to successful generation of the token to the selected chip, the selected chip is activated for service access.

By employing a group key that is common to the plurality of chips, and then securing the generated data files with the group key, this means that the data files are chip agnostic, and accordingly can be loaded onto any chip having that group key stored thereon. The group key can for example be associated with batches of chips or chips of a particular class or type, and accordingly the data files can be loaded onto any of the chips within the batch or of that particular class or type.

However, as mentioned earlier, it is important to be able to tie a given subscription profile to a specific chip in order to meet the duplicate prevention requirement. This is achieved by using token generation software executed in a secure execution environment to perform a token generation process to generate a token for the selected chip. At the time of the load operation being performed, the chip is in an initial state in which service access is disabled. The token is required to allow the chip to be activated for service access. The token generation software restricts generation of the token so that only one token per data file is generated. As the token allocation software is executed in a secure execution environment, the token allocation process can be trusted to be performed correctly, even if the entity performing the load operation is not an accredited entity. Even if the given data file is installed on two or more chips so that multiple chips share the same service credential, this does not breach the duplicate prevention requirement, because only one of those chips will gain the token allowing the chip to be activated for access to the service. Hence, there is still only a single instance of a chip that can access the service using the service credential for the subscription profile associated with the given data file. An advantage of using the token generation software executing in the secure execution environment to enforce the duplicate prevention requirement (rather than an alternative technique such as using a key transformation process executing as part of the load operation to transform an initial service credential specified in the data file to a chip-specific service credential to be used to access the service) is that there is no need for service-operator-specific information, which may be used in the credential derivation process for generating the service credential to be used for authentication with that service provider, to be exposed to a potentially unaccredited entity such as the entity managing loading of the data files onto the chips.

Further, by using the security module operating software to generate a cryptographically authenticated proof of loading file, a trusted entity (such as the entity that generated the data files) can perform a verification/analysis of the loading activities performed, to obtain trust in the process despite the loading of the data files being performed by a potentially unaccredited entity.

In one example implementation a single bootstrap subscription profile will be loaded onto a chip at the manufacturing stage, and further profiles may subsequently be loaded later on in the security module lifecycle (e.g. within an accredited environment).

The security module operating software can be loaded onto the chips in any suitable manner. For instance that software may be installed on a chip when the group key is stored onto that chip. However, in one example implementation each data file provides the security module operating software, and the security module operating software is loaded onto the selected chip during the loading operation.

The secure execution environment is a processing environment in which token allocation software can be executed while protecting the token generation software (and its associated data and program code) from access by software or hardware outside the secure execution environment.

For example, the secure execution environment may comprise a tamper-resistant secure element. For example, the tamper-resistant secure element may comprise a smart card. Hence, a trusted entity (e.g. the entity providing the data files providing the data for the subscription profiles) can provide a tamper-resistant secure element (e.g. smart card) to the entity controlling the loading of data files onto chips (e.g. a device manufacturer integrating the chip into an electronic device). The secure element has installed on it the token generation software and has a communication interface for interacting with a device managing performing of the load operation. For a chip loaded with a given data file, the corresponding PoL file is provided to the secure element and the token generation software decides whether to generate a token for that chip (while ensuring that only one token is generated per data file identifier). If the chip receives a valid token from the secure element, it can be activated for service access. The secure element has a tamper protection mechanism to resist and/or protect against attempts to tamper with the processing performed by the smart card. By denying service access to chips which do not receive a token from the secure element and using the self-containment and tamper resistance of the secure element to provide the security guarantee associated with the token generation processing, this allows a potentially unaccredited entity to perform the loading of the data file, while still meeting the demands of the service operator for the duplicate prevention requirement to be enforced based on software controlled by an accredited entity.

A tamper-resistant secure element, such as a smart card, can be a convenient way to ensure that the token generation software is processed securely even in a case when the entity controlling the loading is potentially unaccredited. However, it is not the only way of implementing the secure execution environment.

Another example can be that the secure execution environment comprises a trusted execution environment (TEE) on a processing device which also supports a normal execution environment for performing untrusted processing. The TEE may be implemented using processor architectural features which provide a partitioning between the normal execution environment and the TEE, so that although the software associated with the normal execution environment and the TEE may share the same physical processor and the same memory system, the processor architecture has a mechanism to distinguish instruction fetch requests and memory access requests made in the normal and trusted execution environments so that data and program code associated with the trusted execution environment can be prevented from being accessed or observed by program code operating in the normal execution environment. An example of a processor architecture which can be used to provide a TEE is TrustZone^{®} provided by Arm^{®}. As for the secure element example, by executing the token generation software within a TEE this can provide a security guarantee allowing the generation of the tokens to be trusted even if executed on a device managed by an unaccredited entity, to help enforce the duplicate prevention requirement for security module provisioning.

The token may comprise an attestation attesting that the token generation software is trusted to generate the token. For example, the token may be cryptographically authenticated with a key controlled by a trusted entity (e.g. an SAS-accredited entity), so that a verifier (e.g. the security module operating software on the chip itself, or a remote entity such as the data file generating entity) can verify with a corresponding key whether the token has been generated by an authorised source. The key used to sign the token can be a different key to the PoL signing key used to sign the PoL file, or could be the same key as the PoL signing key.

The token may specify the unique chip identifier, so that it can be specific to a particular chip and cannot be used by a different chip.

In some examples, the token may also specify the data file identifier (or identifiers) for which the token was generated.

The token could in some cases also specify information for attesting that the token generation software meets certain requirements. For example, the token could include a measurement value (e.g. a hash value) derived from program code or configuration data associated with the token generation software, so that the measurement value can be compared with an expected value to confirm that the correct token generation software has been executed in the correct configuration settings. This can be particularly useful if the TEE is used to implement the secure execution environment, to confirm that the correct software has been installed for execution in the TEE. In the case of a TEE, the token could also include information attesting to information about the hardware platform executing the TEE, which could be used to verify that the TEE has been configured correctly and is executing on a device with acceptable security credentials.

In response to successful generation of the token for the selected chip, the token may be loaded onto the selected chip.

In response to loading the token onto the selected chip, the security module operating software may control activation of the selected chip for service access.

Activation of the selected chip for service access may be performed in response to determination that the token loaded onto the selected chip passes a token validity check. For example, the token validity check can include checking whether the token is signed with the appropriate token signing key, and/or whether the unique chip identifier specified by the token corresponds to the unique chip identifier of the selected chip. Hence, the security module operating software on the selected chip can check for the presence of a valid token and activate the selected chip for network access if the token meets any conditions for service activation (e.g. verification of the trust attestation based on the token signing key mentioned earlier, and checking of whether the token is for the correct chip and is not a token generated for a different chip). The token can also be stored for later use, e.g. to enable verification of the token by an external entity such as the network operator or an entity which manages the generation of the data files providing the data for the subscription profile.

The activation of the selected chip for service access can be implemented in various ways. However, in one example, activation comprises enabling use of a command necessary for successful access to the service. For example, the activation may comprise enabling use of an authentication command used as part of a challenge-response handshake between the chip and a service access controlling apparatus, when negotiating service access. For example, to authenticate with the service, the security module operating software on the chip uses the authentication command, which causes the chip to compute a response based on a challenge (random data) provided by the service access controlling apparatus and an authentication key provided as at least part of the service credential of the corresponding subscription profile. If the authentication command is blocked from being executed, the security module cannot respond to the challenge provided by the service access controlling apparatus and so the device cannot be authenticated for access to the service.

When generating the token, the token generating software checks whether a token has already been generated for a chip loaded with the data file having the unique data file identifier specified by the PoL file, and prevents generation of the token to the selected chip when the token has already been generated for a chip loaded with the data file having the unique data file identifier specified by the PoL file. For example, the token generation software may maintain a record of the unique data file identifiers for which a token has already been generated and use that record to check for duplicate installation of the same data file on more than one chip, so that only one of those chips with duplicate subscription profiles is able to be activated for service access.

The token generation software may also check whether the unique data file identifier specified by the PoL file is one of a set of authorised unique data file identifiers for which the token generation software is authorised to generate tokens, and prevent allocation of the token to the selected chip when the unique data file identifier specified by the PoL file is not one of the set of authorised unique data file identifiers. For example, a given instance of the secure element or TEE may be authorised to generate tokens only for a limited set of authorised unique data file identifiers. This can help to restrict which batch of subscription profiles a given entity is able to authorise for service access, to improve security. For example, the secure element may have preinstalled configuration data that defines the authorised unique data file identifiers, and different secure elements sent to different data file loading entities can specify different batches of authorised unique data file identifiers corresponding to the data files for which that data file loading entity is authorised to load and enable for service access.

The token generation software may also check whether the PoL file is correctly formed and is signed with the correct PoL signing key. The token may not be generated for a selected chip if the selected chip is unable to provide a correctly formed PoL file signed by the PoL signing key. This prevents the token being allocated to a chip which cannot provide the appropriate cryptographic attestation to prove that the loading of the subscription profile was performed by a trusted process.

In one example implementation, the method comprises, on successful generation of the token, providing the cryptographically authenticated PoL file to a verifying entity for analysis. For example, the method comprises performing an analysis operation on the cryptographically authenticated PoL file at an entity having access to the PoL signing key, in order to verify, using the signing key, the cryptographically authenticated PoL file. Hence, the entity that performs the verification of the cryptographically authenticated PoL file can ensure that it has been generated legitimately, in particular using the PoL signing key that is known to both the security module operating software loaded onto the chip and the entity that is performing the verification process. This can hence ensure that the received PoL file has been generated by a trusted source, and hence can be treated as a legitimate PoL file.

The entity that performs the verification of the cryptographically authenticated PoL file can take a variety of forms, but will typically be a trusted entity such as the entity that generated the original data files. The manner in which entities are determined to be trusted or not may vary dependent upon implementation, but in one example implementation the earlier-mentioned SAS mechanism is used, and hence the trusted entity will be one that has been SAS accredited. In one particular example implementation, both the entity that creates the original chips, and the entity that generates the data files, and subsequently analyses the PoL files, will be SAS accredited. However, there is no requirement for the entity that loads the data files onto the chips to be SAS accredited, since the PoL file generation operation is arranged to be performed by the security module operating software that has been loaded onto the selected chip and the token generation software is performed within the secure execution environment, and hence does not require the entity loading the data files onto the chips to itself be SAS accredited.

In one example implementation, the entity having access to the signing key is arranged to receive a PoL report containing the cryptographically authenticated PoL files for each of the plurality of data files, and performance of the analysis operation further comprises checking that each data file has been used.

Hence, once the generated plurality of data files have been successfully loaded onto chips, a PoL report can be generated containing the various cryptographically authenticated PoL files for each of the loaded data files, and the entity performing the analysis operation can then perform additional checks over and above verifying that each cryptographically authenticated PoL file has been generated using the correct signing key. In particular, the entity performing the analysis operation can check that each data file that was generated has in fact been used, and further if desired can check that each data file has only been used once. This can be readily determined from the decrypted PoL files, since as mentioned earlier such PoL files will identify the unique data file identifier for the loaded data file along with the unique chip identifier for the chip onto which the loaded data file has been loaded.

On successful completion of the analysis operation, the method may further comprise generating an output file that in one example implementation may be provided to the service operator (e.g. a MNO) that supplied a corresponding input file used to generate the plurality of data files. The output file can identify various dynamic data relevant to each subscription profile represented by the loaded data files, and that dynamic data can be arranged to include, amongst other things, the service credential for each subscription profile. Alternatively, the service credential for each subscription profile may be provided direct to the service operator by the entity which generated the data files, since there may be no transformation step of transforming the service credential used by a given chip relative to the service credential that was specified in the data files.

In one example implementation, when the load operation fails for a given data file when using a currently selected chip, the method further comprises selecting a different chip and re-performing the load operation for the given data file using the selected different chip. Hence, due to the use of the shared group key, "holes" caused by unsuccessful loading onto the initially selected chip can easily be patched by installing the same data file onto a selected different chip. This does not risk duplicate subscription profiles being able to access the service based on the same service credential, because the token generation software executed in the secure execution environment enforces that a single token is allocated per unique data file identifier, to grant service access to only one chip per subscription profile.

When selecting the different chip, any chip can be selected that has the same group key stored thereon, since as mentioned earlier the use of the group key effectively enables the data files to be chip agnostic, to the extent that they can be loaded onto any of the chips that have that group key stored thereon and are not tied ab initio to a specific chip.

As mentioned earlier, when the security module operating software generates a PoL file, it is arranged to cryptographically sign that PoL file using a PoL signing key. The PoL signing key can be any suitable key known to both the security module operating software and the entity that will be performing the analysis of the PoL files. In one particular example implementation, the PoL signing key is the earlier-mentioned group key, but it will be appreciated that there is no requirement for the group key to be used and instead a different key could be used if desired. Further in one example implementation, the PoL signing key may be generated and included in the data file when the data file is created.

With regards to the group key that is both stored on the plurality of chips, and is used to encrypt each of the data files, then that group key can be specified in a variety of ways, and changed at any desired granularity. For example, the group key may be chosen to be specific to a particular batch of chips. Alternatively, a particular group key may be associated with all chips generated of a particular class of chip, such that different group keys are used for different classes of chips. When a generated data file is then encrypted using the group key, it will be understood that that data file can be loaded onto any chip to which that group key relates, whether that be a particular batch of chips or a particular class of chip.

In one example implementation, the token generation software is provided by an entity verified as meeting specified security requirements. In one example implementation, the generation of the plurality of data files is performed by an entity verified as meeting the specified security requirements. In one particular implementation, the specified security requirements are the SAS requirements. Further, in one example implementation, the entity performing the generation of the plurality of data files is also the entity that is subsequently used to perform the analysis operation on the generated PoL files, and hence is responsible for generating the output file that can be returned to the MNO.

However, as mentioned earlier, the loading of the data files onto the chips can be performed by an entity that is not required to meet the specified security requirements. This provides a great deal of flexibility in the security module provisioning process, whilst ensuring conformance to the SAS requirements. In particular, whilst the chips can be constrained to be generated within an SAS accredited environment, the plurality of data files can also be constrained to be generated within an SAS accredited environment, and the token generation software can also be constrained to be provided by an SAS accredited environment, the task of loading the data files onto the chips can be performed at a wide variety of different locations by a wide variety of different entities. In one example implementation, the loading of the data files onto the chips is performed by a device manufacturer that is provided with the encrypted versions of the data files by the entity that performed the generation of those data files.

The technique is particularly useful where the security modules comprise eSIMs or iSIMs, for which the embedded/integrated nature of the SIMs increases the likelihood that personalisation operations are performed at different times, in different locations, and/or by different entities, and hence making any rework process required to deal with the above-mentioned "holes" much more complex and generating more significant delays in the manufacturing chain. These concerns can be alleviated with the technique discussed above. However, if desired, the technique could also be used for SIMs which are not eSIMs or iSIMs.

The service credential may comprise any information used to establish identity of the security module, the device of which the security module forms part, or the user of that device, when performing an authentication for gaining access to a service. For example, the service credential may comprise a service authentication key.

For example, the service authentication key may be a network authentication key used to gain access to a network (e.g. a cellular network).

The activation of the selected chip based on the token may comprise activating the selected chip for network access.

However, the technique can also be applied for provisioning a subscription profile for a security module used to provide access to other kinds of remote services, other than cellular network access. For example, the security module could be a module used by an Internet of Things device (e.g. a smart meter) to negotiate access to a server operated by a service provider (e.g. the energy company associated with the provision of the energy whose usage is being measured by the smart meter).

In another example, an apparatus is provided for generating a token enabling a security module, formed by a chip with at least one subscription profile installed thereon, to be activated for access to a service. The apparatus comprises: storage circuitry to store token generation software; and processing circuitry to execute the token generation software within a secure execution environment; wherein the token generation software controls the processing circuitry to: obtain, from a selected chip, a proof of loading (PoL) file that is cryptographically authenticated using a PoL signing key, the PoL file providing a proof of successful loading of a data file onto the selected chip, the PoL file identifying a unique chip identifier of the selected chip and a unique data file identifier for the loaded data file, the loaded data file providing data for an associated subscription profile including a service credential for the associated subscription profile; determine whether the token has already been generated for another chip loaded with the data file having the unique data file identifier specified by the PoL file; and in response to determining that a token has not already been generated for any other chip loaded with the data file having the unique data file identifier specified in the PoL file, allocating the token to the selected chip to enable the selected chip to be activated for service access. For example, this apparatus could be a tamper-resistant secure element (e.g. smart card) as discussed above, or could be a processing system having a TEE with the token allocation software executing within the TEE.

Particular examples will now be described with reference to the Figures. These particular examples are described in the context of eSIMs or iSIMs being provisioned with a subscription profile for cellular network access. It will be appreciated that in other examples the same techniques could be applied for provisioning of other kinds of security module with subscription profiles. In this case, the network authentication key described below becomes a service authentication key or other service credential, and activation of the chip for network access becomes activation of the chip for service access, but otherwise the steps of providing, loading and decrypting the data files, generating the PoL file, obtaining the token using the token allocation software executing in the secure execution environment, and activating the chip for service access can be similar to those described below.

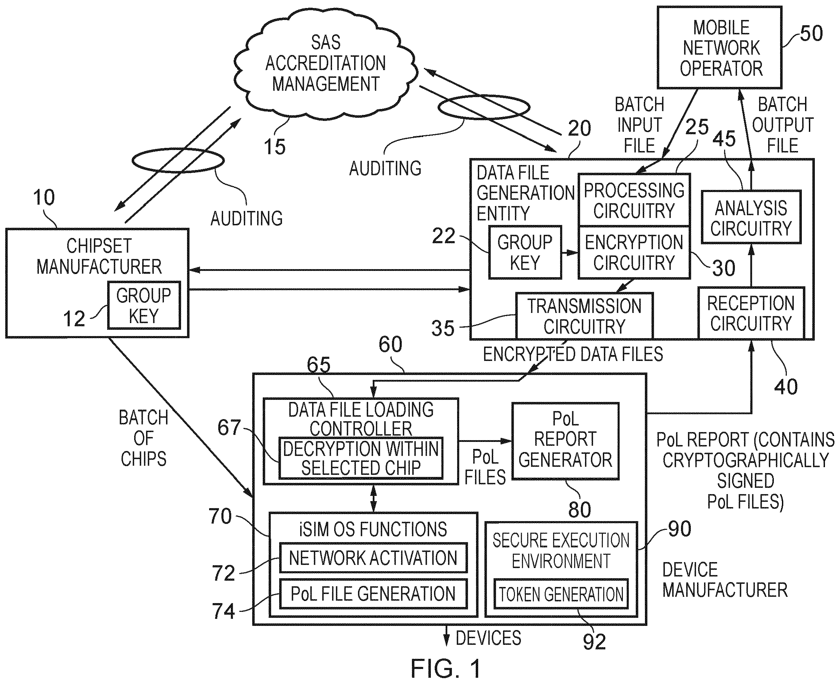

Figure 1 is a block diagram of a system in accordance with one example implementation. As shown in Figure 1, a chipset manufacturer 10 can be arranged to generate a batch of chips, with the activities of the chipset manufacturer being SAS accredited. A SAS accreditation management mechanism 15 can be used to ensure conformance with the SAS requirements by the chipset manufacturer 10, and any other entity wishing to be SAS accredited, for example the data generation entity 20. The SAS accreditation management mechanism 15 may be used by the relevant body, for example the GSMA, to perform security audits of each entity wishing to become SAS accredited, and if the security audits are passed the GSMA can be arranged to provide an accreditation to the relevant entity, e.g. the chipset manufacturer 10, typically for a given period of time. This means that this entity is trusted by the GSMA (and therefore all of their MNO members). After that, there is no need for further communication between the SAS accredited entities and the SAS accreditation management, and instead two SAS accredited entities can communicate directly and exchange information in a secure manner (for example the chipset manufacturer 10 and the data generation entity 20) without SAS accreditation management being involved.

Through suitable application of the SAS requirements, the chipset manufacturer can perform personalisation of the chip hardware with security credentials (for example chip unique root of trust (RoT) keys). During the manufacture of the chips, each chip will have a unique chip identifier for that chip stored thereon, and the chipset manufacturer will also store within each of the chips a group key that has been identified for those chips (for example a group key for the particular batch of chips being manufactured, or for the particular class of chips being manufactured). This group key can be stored locally to the chipset manufacture, as indicated by the element 12 in Figure 1.

As also shown in Figure 1, a data file generation entity 20 may be provided that is responsible for generating data files representing a batch of subscription profiles. In particular, a mobile network operator (MNO) 50 may provide a batch input file to the data file generation entity 20 that contains subscription profile identification information for a batch of subscription profiles that are to be loading onto security modules. This subscription profile identification information may for example comprise IMSI and/or ICCID information, and the MNO 50 may specify a range of values for those items of identification information.

As noted above the data file generation entity 20 can also be subjected to auditing by the SAS accreditation management mechanism 15 in order to obtain an SAS accreditation. The data file generation entity 20 includes processing circuitry 25 that is arranged to generate data files for each of the specified subscription profiles. When generating the data files, the processing circuitry is arranged to ensure appropriate personalisation of the eSIM or iSIM operating system (OS) credentials (also referred to as the UICC OS credentials) in a manner that conforms to the SAS requirements.

These individual data files can be formed as a binary log of data, and can be arranged to comprise various elements. In particular, each data file may comprise a variety of different profile information that defines each subscription profile. This information may include both a static part, for example information that is specific to the MNO such as roaming agreements, address books, etc., and a dynamic part (this dynamic part often being referred to as the credentials of the subscription profile), the dynamic part containing data that is unique to the particular subscription profile, such as the above-mentioned IMSI and ICCID information, a PIN code, various keys including for example a network authentication key (Ki) associated with the specific IMSI, etc. Each data file will also be provided with a unique data file identifier for that data file.

If desired, the data file can also be arranged to include other information, for example the eSIM or iSIM operating system software used to render the SIM functionality on the chip onto which the data file is loaded. Alternatively, this eSIM or iSIM operating software may not be provided in the data file, but instead may be loaded onto the individual chips by the chipset manufacturer at the time the chip is manufactured. For the purposes of the following description, it will be assumed that the eSIM or iSIM OS does form part of each data file generated by the processing circuitry 25.

The various data files generated by the processing circuitry 25 are then encrypted using the encryption circuitry 30, which has access to the same group key that is used by the chipset manufacturer for the group of chips onto which the generated data files are to be loaded. This group key can be stored locally to the data file generation entity 20, as indicated by the element 22. In one example implementation the group key is decided by the chipset manufacturer 10 and securely exchanged with the data generation entity 20.

The encrypted data files as generated by the data file generation entity 20 can then be transmitted by the transmission circuitry 35 to a device manufacturer 60, which is also arranged to receive the batch of chips manufactured by the chipset manufacturer 10. It should be noted that whilst the chipset manufacturer 10 and the data file generation entity 20 are SAS accredited, there is no requirement for the device manufacturer 60 to be so accredited, and instead the techniques described herein can ensure that the individual data files are loaded onto the chips in an appropriate manner to ensure that each data file is used, and is used only once, and thus ensure that the requirement for the prevention of duplicates is ensured even though the loading activity takes place within a non-SAS accredited entity. In particular, the data files are encrypted by the data generation entity and are decrypted inside the chipset, and therefore sensitive data is not exposed at the device manufacturer site.

As will be discussed in more detail later, the device manufacturer can be arranged to seek to load the provided data files onto chips within the batch of chips provided by the chipset manufacturer. In particular, a data file can be selected, a chip can be selected, and then the data file loading controller 65 within the device manufacturer can be used to seek to load the selected data file onto the selected chip. During this operation, a decryption operation 67 can be performed within the tamper-resistant chipset, that uses the group key as stored on the chip to seek to decrypt the encrypted data file. In order for the data file to be successfully decrypted and loaded onto the chip, it is necessary for the group key stored on the chip to match the group key that was used to encrypt the data file at the data file generation entity 20, and if this is not the case the loading operation will fail.

The activities performed by the device manufacturer 60 to seek to load the provided data files onto the provided chips can cause certain eSIM or iSIM OS functions 70 to be activated, including a network activation function 72 and a Proof of Loading (PoL) file generation function 74 described further below.

If the data loading operation fails, then in one example implementation the currently considered chip can be discarded and instead the same data file can be loaded onto another chip from the batch. Once a specific data file has been successfully loaded onto a chip and the key transformation operation has been successfully performed, then the PoL file generation function 74 of the eSIM or iSIM OS can be invoked. This function employed by the eSIM or iSIM OS generates a PoL file that is cryptographically authenticated using a PoL signing key known both to the eSIM or iSIM OS and the data file generation entity 20. The PoL file identifies both the unique data file identifier that was allocated to the data file at the time it was generated by the data file generation entity 20, and the unique chip identifier of the chip onto which the loaded data has been loaded, and hence it will be appreciated that the PoL file directly associates a specific data file with a specific chip and can act as proof that the specific chip has been provisioned with a subscription profile corresponding to a given data file and network authentication key.

In one example implementation, rather than outputting each PoL file as it is generated, the PoL files are passed to a PoL report generator 80 which waits until a PoL file has been received for every data file in the batch of data files received from the data file generation entity 20, and then collates all of the PoL files into a PoL report that is output back to the data file generation entity 20. In one example implementation this PoL report will contain a cryptographically authenticated PoL file for each successfully loaded data file.

This PoL report is received by a reception circuitry 40 within the data file generation entity 20 and passed to analysis circuitry 45 for analysis. The analysis performed by the analysis circuitry can take a variety of forms, but may for example include a verification of each PoL file by checking each cryptographically authenticated PoL file using the signing key (e.g. the PoL file may be signed or encrypted using the signing key). As mentioned earlier, the signing key will be known to the data file generation entity, and can take a variety of forms. In one particular example implementation, the signing key is chosen to be the group key. Hence, the analysis circuitry 45 can ensure that each PoL file in the PoL report has been generated by the eSIM or iSIM OS in the expected manner, and in particular if any PoL file has been generated using a different signing key this will be detected by the analysis circuitry, and an error condition can be flagged.

Assuming the verification of the various cryptographically authenticated PoL files is successful, the analysis circuitry can also perform some additional checks, in particular checking that each of the generated data files has in fact been used, and further checking that each file has only been used once. Assuming all these checks are passed, then a batch output file can be generated for returning to the MNO 50, this including for each successfully produced eSIM or iSIM (each eSIM or iSIM being a chip onto which at least one data file has been successfully loaded hence specifying at least one subscription profile) certain dynamic data of that eSIM or iSIM. This dynamic data will include the transformed network authentication key generated during the loading process. It is this dynamic data provided in the batch output file that will then be used by the MNO to provision the various eSIMs or iSIMs on to the network.

The PoL file generated for a selected chip by the PoL file generation function 74 of the iSIM OS 70 is also used to check for duplicate installation of the same data file onto different chips. The network authentication key can be specified in a way that makes it specific to the associated subscription profile identified by the data file, but it is not at the time the data file is generated in any way tied to a particular chip. Indeed, as mentioned earlier, the aim of using the group key approach is to ensure that any of the data files generated for a particular batch of chips can be loaded onto any of those chips, since the same group key will be used, and hence any of the data files can be decrypted using that group key. However, in order to ensure the prevention of duplicates, it is important that the data file can only be used once to successfully grant network access.

At the time of the loading operation being performed, the chips are initially in a state in which network access is deactivated. For example, this can be achieved by the eSIM or iSIM OS 70 being initially loaded in a state where use of an authentication command required for network access is disabled. This authentication command may be part of the challenge-response handshake performed between the security module and the network during network authentication, and without that command, the security module cannot respond correctly to the challenge issued by the network and so cannot be authenticated by the network.

The network activation function 72 controls activation of the chip for network access. To be able to activate network access (e.g. by enabling the authentication command to be executed by the chip), the network activation function 72 requires a token to be obtained which acts as proof that the data file loaded on that chip has not also been loaded onto another chip. The token is generated by token generation software 92 executing within a secure execution environment 90. While the device implementing the secure execution environment 90 is physically located at the site of the entity loading the data files (e.g. the device manufacturer 60) who is not security accredited, the secure execution environment is an environment which provides security guarantees against being tampered with by that entity, and the token generation software 92 is provided by an SAS accredited entity (e.g. the data file generation entity 20).

For example, the secure execution environment 90 can be a tamper-resistant secure element (e.g. smart card) dispatched by the data file generation entity 20 or another SAS accredited entity to the entity 60 loading the data files, which provides a self-contained environment for the token generation software 92 resisting external access or tampering and providing an attestation indication (e.g. a signed packet of data signed by a key controlled by a trusted entity) which can be used by the iSIM OS 70 to verify that the token was generated by the trusted software 92. If the secure execution environment 90 is a smart card, the smart card may be read by a smart card reader connected to the data file loading controller 65 (which is itself in communication with the selected chip), so that communication between the chip and smart card can be provided via the smart card reader and the interface between the data file loading controller 65 and chip. Alternatively, the secure execution environment 90 can be a trusted execution environment (TEE) of the data file loading controller 65 or another processor, which has hardware architecture features to partition the processor into a "secure world" and a "non-secure world" with secure program code and data reserved for access by the secure world being inaccessible to the non-secure world. The token generation software 92 may be given a list of authorised data file identifiers of the data files for which the token generation software 92 on a given smart card or instance of the TEE is allowed to grant tokens.

The network activation function 72 of the iSIM OS obtains the PoL file generated for a selected chip, and transmits it to the secure execution environment (e.g. by transmission over a smart card interface or by storing the PoL file to a storage location from which it can be read by token allocation software executing in a TEE).

The token generation software 92 checks the PoL file and confirms whether it is correctly formed and signed with the correct PoL signing key. If the chip is not able to provide a correctly formed and correctly signed PoL file, the chip is not provided with a token.

If the chip provides a correctly formed/signed PoL file, the token allocation software 92 confirms whether the unique data file identifier specified by that PoL file is an authorised data file identifier allowed to be allocated a token by that instance of the token allocation software 92 and also checks whether the unique data file identifier specified by that PoL file has already been granted a token. If the unique data file identifier is an authorised data file identifier and has not previously been granted a token, then the token generation software generates a token and provides it to the selected chip. The token specifies the unique chip identifier (and possibly the unique data file identifier) from the PoL file, and is signed with a key controlled by a trusted entity (such as the data file generation entity 20). The network activation function 72 on the chip verifies the token (e.g. checking that it is signed with an appropriate key associated with a trusted entity, and that the token corresponds to the correct chip identifier (and data file identifier) and if the token is verified, activates the chip for network access so that the chip can now access the network using the network authentication key provided by the loaded data file for the corresponding subscription profile. For example, the network activation function 72 enables the authentication command to be executed.

It should be noted that if any duplicate eSIMs or iSIMs are generated by the device manufacturer, either by accident, or by deliberate action, those duplicates will not be usable. In particular, the token generation software 92 (executing within the secure execution environment 90) controls generation of tokens to ensure only one token can be generated per data file. Hence, even if the data file is installed on duplicate chips, only one of the duplicate eSIM or iSIMs will be activated to allow it to access the network.

Whilst in Figure 1 the analysis of the PoL report is performed by the data file generation entity 20, in other implementations a different SAS accredited entity may be tasked with performing that analysis operation.

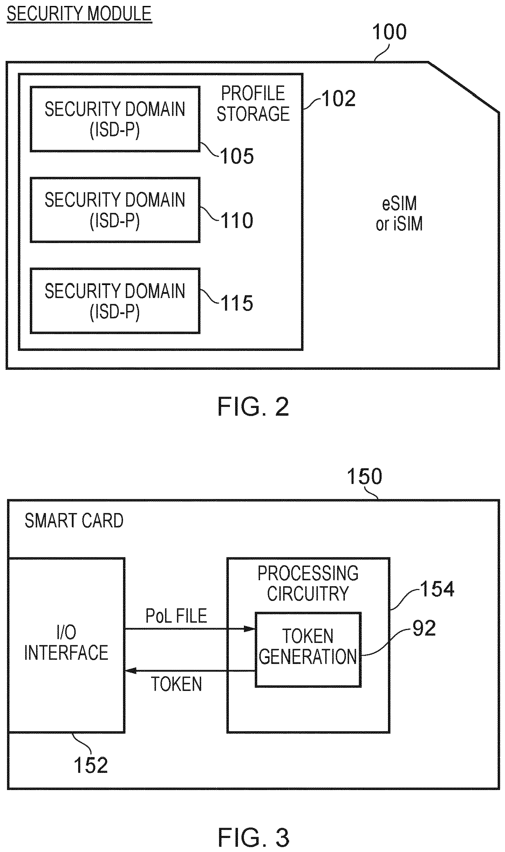

Figure 2 is a diagram schematically illustrating a security module (eSIM or iSIM) 100. The security module 100 includes profile storage 102 in which to store one or more subscription profiles. In particular, individual security domains 105, 110, 115 can be established within the profile storage 102, where each security domain is used to host an associated subscription profile. The subscription profile of an enabled security domain within the security module is then used to control access via that security module to network infrastructure provided by the network operator with which the subscription profile of that enabled security domain is associated.

During the initial provisioning process described with reference to Figure 1, it will typically be the case that a single subscription profile will be loaded onto a particular chip, and hence initially only a single security domain 105 may be established within the profile storage 102. However, in an alternative implementation several subscription profiles could be loaded onto a single chip during the provisioning stage, with the above described technique discussed with reference to Figure 1 still ensuring that each subscription profile is only used once (in that case, the PoL file may specify the data file identifiers for each of the profiles for which data files are loaded onto the chip and the token generation software 92 ensures that each of those data file identifiers has not already been granted a token before generating the token for the selected chip). In practice, it may be simpler to implement the token generation software 92 if each chip is restricted to being loaded with only a single subscription profile during the manufacturing stage at the site of the device manufacturer 60.

Irrespective of whether one, or more than one, subscription profile is loaded onto the chip at the provisioning stage, further subscription profiles may subsequently be loaded onto the security module during the life cycle of that security module (e.g. those later loading operations may be controlled by an SAS accredited entity so that the SAS accreditation provides the guarantees of duplicate prevention).

Figure 3 illustrates an example of a smart card 150 which is an example of a tamper-resistant secure element. This is an example of the secure execution environment 90 mentioned earlier. The smart card 150 has an input/output (I/O) interface for communication with an external device. For example, a smart card reader may be used to interface between the I/O interface 152 of the smart card 150 and an I/O interface (e.g. a USB port) of the external processing system (such as the data file loading controller 65) which communicates with the smart card 150 and the chip. The smart card 150 also has processing circuitry 154 which is self-contained in the smart card 150. Any known smart card security technique may be used to protect the processing circuitry 154 and the token generation software 92 executing on the processing circuitry 154 against external access and/or tampering. In use, the PoL file confirming proof of loading of the data file on a given chip is received over the I/O interface 152 and provided to the processing circuitry 154, which verifies whether the PoL file is correctly formed and signed, and if so, confirms whether the corresponding data file identifier is authorised for token generation by the smart card 150 and has not already been granted a token, and if so, generates a token for the data file identifier which is returned via the I/O interface 152 and loaded onto the chip for processing by the network activation function 72.

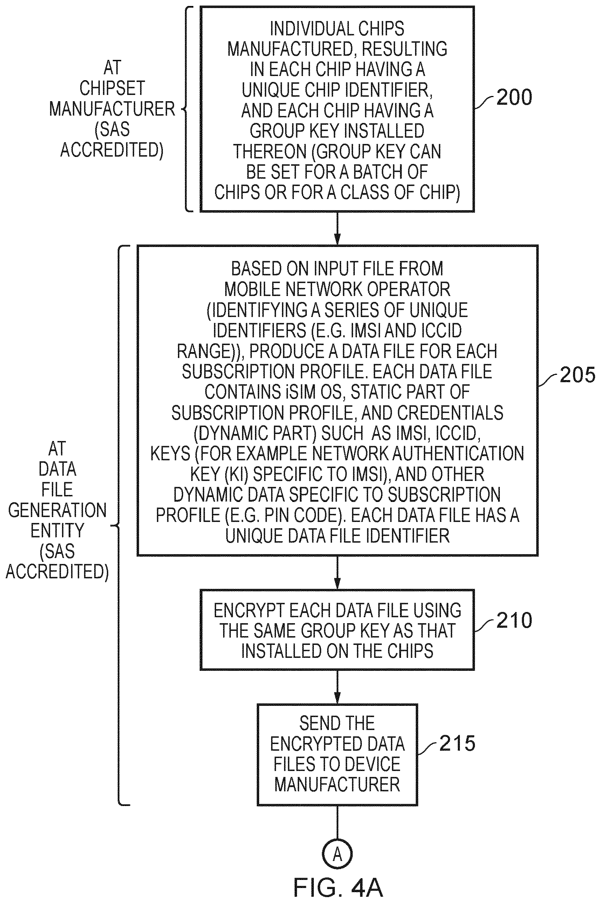

Figures 4A to 4D provide a flow diagram identifying a sequence of steps performed to manage the provisioning of security modules in accordance with one example implementation.

At step 200, a batch of individual chips are manufactured, resulting in each chip having a unique chip identifier, and each chip having a group key installed thereon. The group key can be set in a variety of ways and may be chosen to be specific to a particular batch of chips, or alternatively to be specific to a particular class of chip. As will be appreciated from the earlier discussion of Figure 1, step 200 may be performed at a chipset manufacturer such as the chipset manufacturer 10 shown in Figure 1, and in one example implementation that entity is SAS accredited.

At step 205, a data file generation entity will produce a data file for each subscription profile identified by a received input file. In particular, an input file can be received from an MNO identifying a series of unique identifiers for subscriptions, which may be specified for example using ranges of IMSI and ICCID information. Each data file produced will include both a static part of the corresponding subscription profile and a dynamic part (as mentioned earlier this dynamic part also being referred to as the credentials of the subscription profile). The dynamic part may for example include the IMSI and ICCID information, one or more keys such as the network authentication key specific to the IMSI, and any other dynamic data that is specific to the subscription profile, for example a PIN code. Each data file has a unique data file identifier associated with it. As discussed earlier, each data file can also include other information, such as the eSIM or iSIM OS that is to be loaded onto the chip to implement the functionality of the eSIM or iSIM.

At step 210 each produced data file is encrypted using the same group key as that installed on the chips, this group key information being shared between the chipset manufacturer and the data file generation entity. Then, at step 215 the encrypted data files are sent to a device manufacturer. From the earlier discussion of Figure 1, it will be appreciated that each of steps 205, 210, 215 can be performed by a data file generation entity such as the data file generation entity 20 shown in Figure 1, and in one example implementation that data file generation entity is SAS accredited.

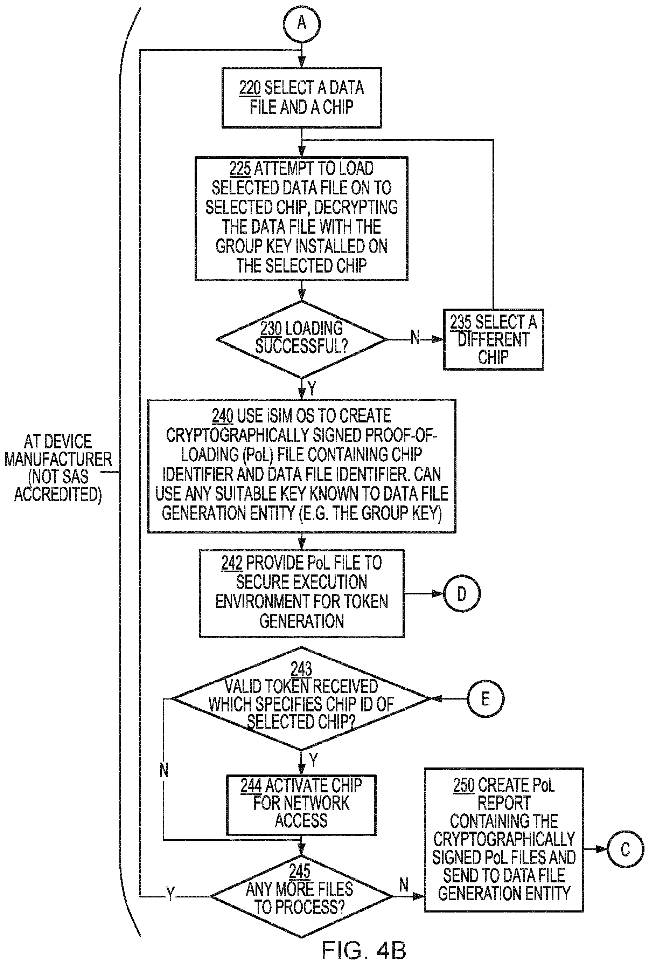

Figure 4B then shows a sequence of steps performed at the device manufacturer in order to install the produced data files onto chips produced by the chipset manufacturer. As mentioned earlier, the device manufacturer does not need to be SAS accredited. At step 220, a data file from amongst the provided data files is selected, and also a chip from amongst the batch of chips is selected. Then, at step 225, an attempt is made to load the selected data file onto the selected chip, during which the data file will be decrypted within the selected chip, using the group key that is installed on the selected chip.

At step 230 it is determined whether the loading operation was successful, and if not a different chip from amongst the batch of chips provided by the chipset manufacturer is selected at step 235, and the process returns to step 225.

Assuming the loading was successful, then the process proceeds to step 240 where the eSIM or iSIM OS is used to create a cryptographically authenticated PoL file containing both the unique chip identifier for the chip onto which the data file has been loaded and the unique data file identifier for the data file that has been loaded. Any suitable key can be used to perform the signing operation, provided it is a key that is known to the data file generation entity, and in one example implementation the group key is used.

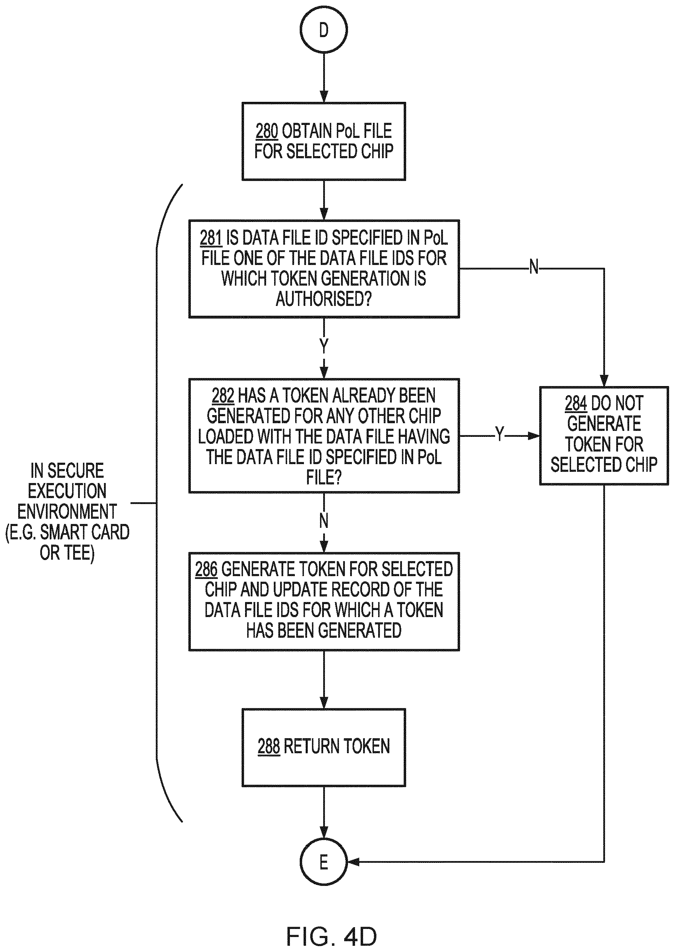

At step 242 the PoL file is provided to the secure execution environment 90 (e.g. tamper-resistant secure element or TEE) for the token generation process, which is described in more detail with respect to Figure 4D below.

At step 243 the network activation function 72 of the eSIM or iSIM OS checks whether a valid token has been received from the secure execution environment 90. For example, token validity may depend on:
- the token being correctly formed and signed with an appropriate signing key;
- the token specifying a chip identifier corresponding to the chip identifier of the selected chip; and
- (in some implementations) the token specifying a data file identifier corresponding to the data identifier of the loaded data file.
If a valid token has been received, then at step 244 the chip is activated for network access, e.g. by enabling the authentication command to be executed by the chip. If no valid token is received, then step 244 is omitted so that the chip remains inactive for network access.

At step 245 it is determined whether there are any more data files to process within the batch of data files provided by the data file generation entity. If so, the process returns to step 220, but if not the process proceeds to step 250.

At step 250 a PoL report is created that contains the cryptographically authenticated PoL files for each successfully loaded data file, and that created PoL report is then sent to the data file generation entity.

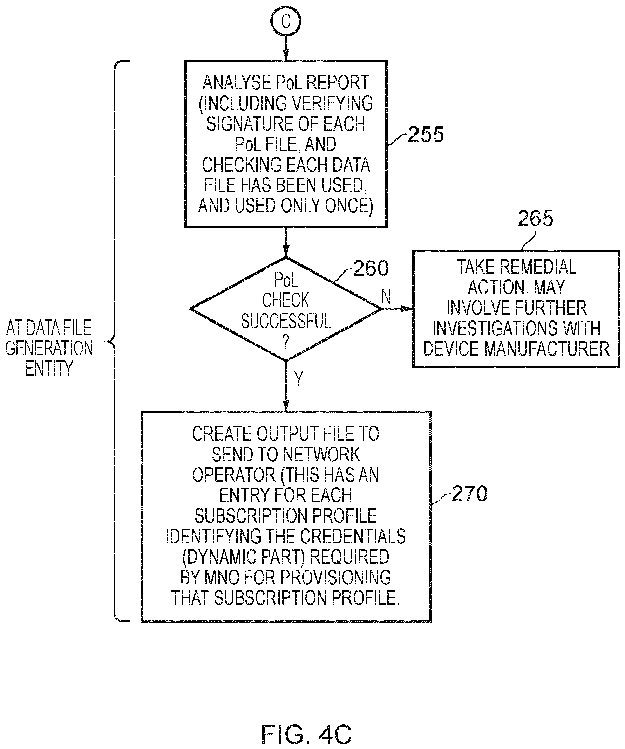

As shown in Figure 4C, a sequence of steps are then performed by the data file generation entity based on the received PoL reports. In particular, at step 255 the PoL report is analysed in order to check a number of aspects of the PoL report. This may include for example verifying the signature of each PoL file using the signing key, and then checking that each data file has been used, and has been used only once. At step 260 it is determined whether the PoL check is successful, and if not then at step 265 some remedial action will be taken. This can take a variety of forms depending on implementation, but may involve the data file generation entity undertaking further investigations with the device manufacturer to seek to determine why any issues identified by analysis of the PoL report have arisen.

Assuming the PoL check is successful, then at step 270 an output file is created to send to the network operator. This output file can be generated in the standard manner, and may be arranged to include an entry for each subscription profile identifying the credentials (i.e. the dynamic part) of that subscription profile that will be required by the MNO in order to provision that subscription profile onto the network. The credentials include the network authentication key included in the particular data file loaded onto a particular chip.

Figure 4D illustrates steps performed in the secure execution environment 90, by the token generation software 92. At step 280 the PoL file for a selected chip is obtained by the token generation software 92. At step 281, the software 92 checks whether the unique data file identifier specified in the PoL file is one of the authorised data file identifiers for which the token allocation software 92 is authorised to grant tokens. Also, at step 282 the token generation software 92 checks whether a token has already been generated for the unique data file identifier specified in the PoL file. If either the data file identifier is not an authorised data file identifier, or a token has already been generated for the data file identifier, then at step 284 no token is generated for the selected chip. If the PoL file specifies an authorised data file identifier and a token has not yet been generated for that data file identifier, then at step 286 a token is generated for the selected chip (signed with the token signing key), and the token generation software 92 updates its record of which data file identifiers have already been allocated a token, to indicate that the unique data file identifier specified in the PoL file has now been allocated a token (to prevent a further chip being allocated a token for the same unique data file identifier in future). The generated token is returned to the chip at step 288, which can then process the token as described above in steps 243 and 244 of Figure 4B.

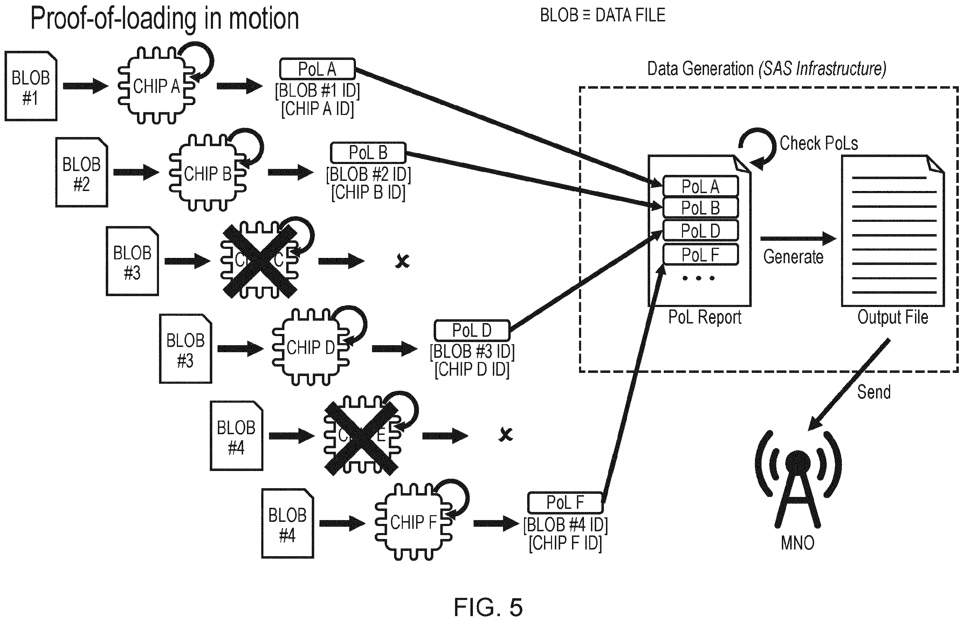

Figure 5 schematically illustrates parts of the above described proof of loading mechanism other than the token generation. In Figure 5, the term "blob" is an acronym for binary log of data, and each blob is hence an instance of the earlier-described data file. As shown in Figure 5, blob number 1 is loaded onto chip A. Assuming successful completion of the loading process, then a PoL file, referred to as PoL A in Figure 5, is produced identifying both the unique identifier of the blob and the unique identifier of the chip. This PoL file is encrypted as discussed earlier using a signing key, and can then be included in a PoL report provided back to the data generation entity.

As shown in Figure 5, this process can be repeated for each individual blob, and in the event of a failure to load a particular blob onto a particular chip, such as shown in the example of Figure 5 when attempting to load blob number 3 onto chip C, then the relevant chip can be discarded and the same blob can be loaded onto a different chip (as shown in Figure 5 by the example of blob number 3 being loaded onto chip D). Similarly, as shown in Figure 5, it is assumed that a failure occurs when an attempt is made to load blob number 4 onto chip E, but subsequently blob 4 is successfully loaded onto a different chip (chip F).

Once all of the blobs have been successfully loaded onto a chip, then the various generated PoL files can be collated into a PoL report that is provided back to the data generation entity that is part of the SAS infrastructure. The various PoL files within that PoL report can then be checked, and assuming all the checks are passed, an output file can be generated for sending back to the mobile network operator.

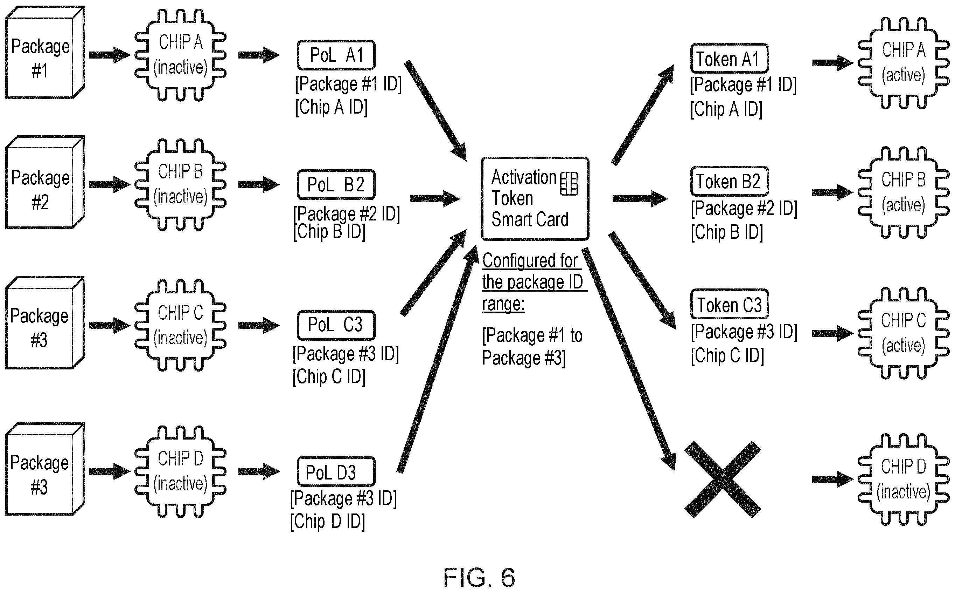

Figure 6 illustrates the token generation portion of the proof of loading mechanism. In this specific example, the secure execution environment is a smart card. The "packages" #1, #2, #3 shown in Figure 6 are examples of the blobs/data files mentioned earlier. The PoL files for any chips successfully loaded with data files are provided to the smart card, which generates a single token per data file ID (package ID). In this example, package #3 is installed (either intentionally or inadvertently) onto two separate chips C and D. However, the token generation software executing in the smart card detects this and only generates one token corresponding to package #3, which in this example is awarded to Chip C enabling Chip C to access the network using the subscription profile specified in package #3. As the token specifies the chip ID of chip C, it is specific to chip C and so even if leaked to chip D, the token cannot be used to activate use of the same subscription profile on chip D. Therefore, chip D remains inactive for network access.

By adopting the techniques described herein, this enables the duplicate prevention requirement when producing security modules (such as eSIMs or iSIMs) to be met in an efficient manner, despite the fact that the personalisation processes performed in respect of the hardware and the OS credentials are performed at different times, in different locations, and/or by different entities. In particular, the technique described herein significantly improves the efficiency of the rework process required to deal with the earlier-mentioned "holes" that may occur during the security module generation process, in particular enabling a very significant reduction in any delays in the manufacturing chain. The techniques described herein allow the data files generated not to be tied to a specific chip at the time those data files are generated, due to the use of the group key, but still ensures that individual subscription profiles are tied to individual chips during the loading process so as to ensure that duplication is prevented.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

Although illustrative embodiments of the invention have been described in detail herein with reference to the accompanying drawings, it is to be understood that the invention is not limited to those precise embodiments, and that various changes and modifications can be effected therein by one skilled in the art without departing from the scope of the invention as defined by the appended claims.

## Claims

1. A method of managing the provisioning of security modules, each security module being formed by a chip with at least one subscription profile installed thereon, the method comprising:
providing a plurality of chips, each chip having a unique chip identifier for that chip and having stored thereon a group key that is common to the plurality of chips;
receiving a plurality of data files, each data file encrypted with the group key and having a unique data file identifier for that data file and providing data for an associated subscription profile including a service credential for the associated subscription profile; and
for each data file in the plurality of data files:
performing a load operation to load that data file onto a selected chip, during which the encrypted version of that data file is decrypted using the group key stored on the selected chip;
on successful performance of the load operation, employing security module operating software loaded on the selected chip to generate a proof of loading (PoL) file that is cryptographically authenticated using a PoL signing key, the PoL file identifying the unique data file identifier for the loaded data file and the unique chip identifier of the chip onto which the loaded data file has been loaded;
processing the PoL file using token generation software for generating a token for the selected chip, the token generation software being executed in a secure execution environment and restricting generation of the token to ensure that, for a given data file, if two or more chips are successfully loaded with that given data file, the token is generated for only one of the two or more chips;
in response to successful generation of the token for the selected chip, loading the token onto the selected chip; and
in response to a determination that the token loaded onto the selected chip passes a token validity check, controlling, with the security module operating software loaded on the selected chip, activation of the selected chip for service access.

2. The method as claimed in claim 1, wherein the secure execution environment comprises a tamper-resistant secure element.

3. The method as claimed in claim 2, wherein the secure execution environment comprises a smart card.

4. The method as claimed in claim 1, wherein the secure execution environment comprises a trusted execution environment.

5. The method as claimed in any preceding claim, wherein the token comprises an attestation attesting that the token generation software is trusted to generate the token.

6. The method as claimed in claim 5, wherein the token is cryptographically authenticated with a token signing key associated with a trusted entity.

7. The method as claimed in any preceding claim, wherein the token generation software checks whether a token has already been generated for a chip loaded with the data file having the unique data file identifier specified by the PoL file, and prevents generation of the token to the selected chip when the token has already been generated for a chip loaded with the data file having the unique data file identifier specified by the PoL file.

8. The method as claimed in any preceding claim, wherein the token generation software checks whether the unique data file identifier specified by the PoL file is one of a set of authorised unique data file identifiers for which the token generation software is authorised to generate tokens, and prevents generation of the token for the selected chip when the unique data file identifier specified by the PoL file is not one of the set of authorised unique data file identifiers.

9. The method as claimed in any preceding claim, wherein the token generation software checks whether the PoL file is correctly formed and is signed by the PoL signing key, and prevents generation of the token for the selected chip when the selected chip is unable to provide a correctly formed PoL file signed by the PoL signing key.

10. The method as claimed in any preceding claim, wherein when the load operation fails for a given data file when using a currently selected chip, the method further comprises selecting a different chip and re-performing the load operation for the given data file using the selected different chip.

11. The method as claimed in any preceding claim, wherein the token generation software is provided by an entity verified as meeting specified security requirements;
the data files are generated by an entity verified as meeting the specified security requirements; and
the loading of the data files onto the chips is performed by an entity that is not required to meet the specified security requirements.

12. The method as claimed in any preceding claim, wherein each data file provides the security module operating software, and the security module operating software is loaded onto the selected chip during the loading operation.

13. A system configured to perform the method of any preceding claim.

## Patentansprüche

1. Verfahren zum Managen der Bereitstellung von Sicherheitsmodulen, wobei jedes Sicherheitsmodul durch einen Chip mit mindestens einem auf ihm installierten Abonnementprofil gebildet wird, wobei das Verfahren Folgendes umfasst:
Bereitstellen mehrerer Chips, wobei jeder Chip eine eindeutige Chip-Kennung für diesen Chip besitzt und einen auf ihm gespeicherten Gruppenschlüssel besitzt, der den mehreren Chips gemeinsam ist;
Empfangen mehrerer Datendateien, wobei jede Datendatei mit dem Gruppenschlüssel verschlüsselt ist und eine eindeutige Datendatei-Kennung für diese Datendatei besitzt, und Bereitstellen von Daten für ein zugeordnetes Abonnementprofil, die einen Dienstberechtigungsnachweis für das zugeordnete Abonnementprofil enthalten; und
für jede Datendatei der mehreren Datendateien:
Ausführen eines Ladevorgangs, um diese Datendatei auf einen ausgewählten Chip zu laden, während dessen die verschlüsselte Version dieser Datendatei unter Verwendung des auf dem ausgewählten Chip gespeicherten Gruppenschlüssels entschlüsselt wird;
bei einer erfolgreichen Ausführung des Ladevorgangs Einsetzen von Sicherheitsmodulbetriebs-Software, die auf den ausgewählten Chip geladen ist, um eine Datei eines Ladebeweises (PoL-Datei) zu erzeugen, die unter Verwendung eines PoL-Signierungsschlüssels kryptografisch authentifiziert wird, wobei die PoL-Datei die eindeutige Datendatei-Kennung für die geladene Datendatei und die eindeutige Chip-Kennung des Chips, auf den die geladene Datendatei geladen wurde, identifiziert; Verarbeiten der PoL-Datei unter Verwendung einer Token-Erzeugungs-Software zum Erzeugen eines Tokens für den ausgewählten Chip, wobei die Token-Erzeugungs-Software in einer sicheren Ausführungsumgebung ausgeführt wird, und Einschränken einer Erzeugung des Tokens, um zu gewährleisten, dass für eine gegebene Datendatei dann, wenn zwei oder mehr Chips erfolgreich mit dieser gegebenen Datendatei geladen wurden, das Token nur für einen der zwei oder mehr Chips erzeugt wird;
in Reaktion auf die erfolgreiche Erzeugung des Tokens für den ausgewählten Chip Laden des Tokens auf den ausgewählten Chip; und
in Reaktion auf eine Bestimmung, dass das auf den ausgewählten Chip geladene Token eine Token-Gültigkeitsprüfung besteht, Steuern mit der auf den ausgewählten Chip geladenen Sicherheitsmodulbetriebs-Software einer Aktivierung des ausgewählten Chips für einen Dienstzugriff.

2. Verfahren nach Anspruch 1, wobei die sichere Ausführungsumgebung ein fälschungssicheres sicheres Element umfasst.

3. Verfahren nach Anspruch 2, wobei die sichere Ausführungsumgebung eine Smart-Card umfasst.

4. Verfahren nach Anspruch 1, wobei die sichere Ausführungsumgebung eine vertrauenswürdige Ausführungsumgebung umfasst.

5. Verfahren nach einem vorhergehenden Anspruch, wobei das Token eine Bescheinigung umfasst, die bescheinigt, dass die Token-Erzeugungs-Software vertrauenswürdig ist, um das Token zu erzeugen.

6. Verfahren nach Anspruch 5, wobei das Token mit einem Token-Signierungsschlüssel, der einer vertrauenswürdigen Einheit zugeordnet ist, kryptografisch authentifiziert wird.

7. Verfahren nach einem vorhergehenden Anspruch, wobei die Token-Erzeugungs-Software überprüft, ob ein Token bereits für einen Chip erzeugt wurde, in den die Datendatei geladen wurde, die die eindeutige Datendatei-Kennung besitzt, die durch die PoL-Datei spezifiziert wird, und eine Erzeugung des Tokens für den ausgewählten Chip verhindert, wenn das Token bereits für einen Chip erzeugt wurde, in den die Datendatei geladen wurde, die die eindeutige Datendatei-Kennung besitzt, die durch die PoL-Datei spezifiziert wird.

8. Verfahren nach einem vorhergehenden Anspruch, wobei die Token-Erzeugungs-Software überprüft, ob die eindeutige Datendatei-Kennung, die durch die PoL-Datei spezifiziert wird, eine einer Gruppe von autorisierten eindeutigen Datendatei-Kennungen ist, für die die Token-Erzeugungs-Software autorisiert ist, Token zu erzeugen, und eine Erzeugung des Tokens für den ausgewählten Chip verhindert, wenn die eindeutige Datendatei-Kennung, die durch die PoL-Datei spezifiziert wird, nicht eine der Gruppe autorisierter eindeutiger Datendatei-Kennungen ist.

9. Verfahren nach einem vorhergehenden Anspruch, wobei die Token-Erzeugungs-Software überprüft, ob die PoL-Datei korrekt gebildet ist und durch den PoL-Signierungsschlüssel signiert ist, und eine Erzeugung des Tokens für den ausgewählten Chip verhindert, wenn der ausgewählte Chip keine korrekt gebildete PoL-Datei, die durch den PoL-Signierungsschlüssel signiert ist, liefern kann.

10. Verfahren nach einem vorhergehenden Anspruch, wobei das Verfahren dann, wenn der Ladevorgang für eine gegebene Datendatei scheitert, wenn ein aktuell ausgewählter Chip verwendet wird, ferner umfasst, einen anderen Chip auszuwählen und den Ladevorgang für die gegebene Datendatei unter Verwendung des ausgewählten anderen Chips nochmal auszuführen.

11. Verfahren nach einem vorhergehenden Anspruch, wobei die Token-Erzeugungs-Software durch eine Entität bereitgestellt wird, für die überprüft wurde, dass sie die spezifizierten Sicherheitsanforderungen erfüllt;
die Datendateien durch eine Entität erzeugt werden, für die überprüft wurde, dass sie die spezifizierten Sicherheitsanforderungen erfüllt; und
das Laden der Datendateien auf die Chips durch eine Entität ausgeführt wird, die die spezifizierten Sicherheitsanforderungen nicht erfüllen muss.

12. Verfahren nach einem vorhergehenden Anspruch, wobei jede Datendatei die Sicherheitsmodulbetriebs-Software bereitstellt und die Sicherheitsmodulbetriebs-Software auf den ausgewählten Chip während des Ladevorgangs geladen wird.

13. System, das konfiguriert ist, das Verfahren nach einem vorhergehenden Anspruch auszuführen.

## Revendications

1. Procédé de gestion de l'approvisionnement de modules de sécurité, chaque module de sécurité étant formé par une puce sur laquelle est installé au moins un profil d'abonnement, le procédé comprenant les étapes suivantes :
fournir une pluralité de puces, chaque puce ayant un identifiant unique pour cette puce et stockant une clé de groupe commune à la pluralité de puces ;
recevoir une pluralité de fichiers de données, chaque fichier de données étant crypté avec la clé de groupe et ayant un identifiant de fichier de données unique pour ce fichier de données et fournissant des données pour un profil d'abonnement associé, y compris un justificatif de service pour le profil d'abonnement associé ; et
pour chaque fichier de données de la pluralité de fichiers de données :
effectuer une opération de chargement pour charger ce fichier de données sur une puce sélectionnée, opération au cours de laquelle la version cryptée de ce fichier de données est décryptée à l'aide de la clé de groupe stockée sur la puce sélectionnée ;
lorsque l'opération de chargement est réussie, employer le logiciel d'exploitation du module de sécurité chargé sur la puce sélectionnée pour générer un fichier de preuve de chargement (PoL) authentifié par cryptographie à l'aide d'une clé de signature PoL, le fichier PoL identifiant l'identifiant unique du fichier de données pour le fichier de donné chargé et l'identifiant unique de puce de la puce sur laquelle le fichier de données chargé a été chargé ;
traiter le fichier PoL à l'aide d'un logiciel de génération de jetons afin de générer un jeton pour la puce sélectionnée, le logiciel de génération de jetons étant exécuté dans un environnement d'exécution sécurisé et limitant la génération du jeton afin de garantir que, pour un fichier de données donné, si deux puces ou plus sont chargées avec succès avec ce fichier de données donné, le jeton est généré uniquement pour l'une des deux puces ou davantage ;
en réponse à la génération réussie du jeton pour la puce sélectionnée, charger le jeton sur la puce sélectionnée ; et
en réponse à la détermination que le jeton chargé sur la puce sélectionnée passe un contrôle de validité de jeton, commander, avec le logiciel d'exploitation du module de sécurité chargé sur la puce sélectionnée, l'activation de la puce sélectionnée pour l'accès au service.

2. Procédé tel que revendiqué dans la revendication 1, dans lequel l'environnement d'exécution sécurisé comprend un élément sécurisé inviolable.

3. Procédé tel que revendiqué dans la revendication 2, dans lequel l'environnement d'exécution sécurisé comprend une carte à puce.

4. Procédé tel que revendiqué dans la revendication 1, dans lequel l'environnement d'exécution sécurisé comprend un environnement d'exécution de confiance.

5. Procédé tel que revendiqué dans l'une quelconque des revendications précédentes, dans lequel le jeton comprend une attestation certifiant que le logiciel de génération de jeton est un logiciel de confiance pour générer le jeton.

6. Procédé tel que revendiqué dans la revendication 5, dans lequel le jeton est authentifié par cryptographie avec une clé de signature de jeton associée à une entité de confiance.

7. Procédé tel que revendiqué dans l'une quelconque des revendications précédentes, dans lequel le logiciel de génération de jetons vérifie si un jeton a déjà été généré pour une puce chargée avec le fichier de données ayant l'identifiant de fichier de données unique spécifié par le fichier PoL, et empêche la génération du jeton pour la puce sélectionnée lorsque le jeton a déjà été généré pour une puce chargée avec le fichier de données ayant l'identifiant de fichier de données unique spécifié par le fichier PoL.

8. Procédé tel que revendiqué dans l'une quelconque des revendications précédentes, dans lequel le logiciel de génération de jetons vérifie si l'identifiant de fichier de données unique spécifié par le fichier PoL fait partie d'un ensemble d'identifiants de fichiers de données uniques autorisés pour lesquels le logiciel de génération de jetons est autorisé à générer des jetons, et empêche la génération du jeton pour la puce sélectionnée lorsque l'identifiant de fichier de données unique spécifié par le fichier PoL ne fait pas partie de l'ensemble d'identifiants de fichiers de données uniques autorisés.

9. Procédé tel que revendiqué dans l'une quelconque des revendications précédentes, dans lequel le logiciel de génération de jetons vérifie si le fichier PoL est correctement formé et signé par la clé de signature PoL, et empêche la génération du jeton pour la puce sélectionnée lorsque la puce sélectionnée n'est pas en mesure de fournir un fichier PoL correctement formé et signé par la clé de signature PoL.

10. Procédé tel que revendiqué dans l'une quelconque des revendications précédentes, dans lequel, lorsque l'opération de chargement échoue pour un fichier de données donné lors de l'utilisation d'une puce actuellement sélectionnée, le procédé comprend en outre de sélectionner une puce différente et de réexécuter l'opération de chargement pour le fichier de données donné à l'aide de la puce différente sélectionnée.

11. Procédé tel que revendiqué dans l'une quelconque des revendications précédentes, dans lequel le logiciel de génération de jetons est fourni par une entité dont il a été vérifié qu'elle satisfait aux exigences de sécurité spécifiées ;
les fichiers de données sont générés par une entité dont il a été vérifié qu'elle satisfait aux exigences de sécurité spécifiées ; et
le chargement des fichiers de données sur les puces est effectué par une entité qui n'est pas tenue de satisfaire aux exigences de sécurité spécifiées.

12. Procédé tel que revendiqué dans l'une quelconque des revendications précédentes, dans lequel chaque fichier de données fournit le logiciel d'exploitation du module de sécurité, et le logiciel d'exploitation du module de sécurité est chargé sur la puce sélectionnée au cours de l'opération de chargement.

13. Système configuré pour exécuter le procédé de l'une quelconque des revendications précédentes.
